# EUROPÄISCHE PATENTSCHRIFT

(11) **EP 2 006 151 B1**
(45) Veröffentlichungstag und Bekanntmachung des Hinweises auf die Patenterteilung: **26.02.2014**
(21) Anmeldenummer: 08004538.8
(22) Anmeldetag: 12.03.2008
(51) Int. Cl.: B60N 2/44, A47C 4/54

(54) **Kraftfahrzeugsitz mit einem belüftbaren kissen mit Schaumstofffüllung**
Motor vehicle seat with an inflatable cushion having a foam padding
Siège de véhicule automobile doté d'un coussin gonflable avec un rembourrage en mousse

(30) Priorität: 06.06.2007 DE 102007026382
(43) Veröffentlichungstag der Anmeldung: 24.12.2008
(73) Patentinhaber: GM Global Technology Operations LLC, Detroit, MI 48265-3000 (US)
(72) Erfinder: Maier, Jürgen, 67808 Weitersweiler (DE); Völz, Reimer, 65428 Rüsselsheim (DE)
(74) Vertreter: Strauss, Peter

(56) Entgegenhaltungen:
- GB-A- 2 344 514
- US-A- 5 772 281
- US-A- 6 092 249

## Beschreibung

Die vorliegende Erfindung betrifft einen Kraftfahrzeugsitz mit mindestens einem belüftbaren und/oder aufblasbaren und/oder evakuierbaren Kissen, wobei das Kissen eine luftdichte Hülle aufweist, die eine Kammer umschließt, in der eine Füllung angeordnet ist.

Aus dem Stand der Technik sind unterschiedliche Kraftfahrzeugsitze bekannt, die mit Kissen versehen sind, wobei die Kissen eine aufblasbare oder evakuierbare Hülle aufweisen. Die Kissen, die dem Komfort oder der Sicherheit des Fahrzeuginsassen dienen, sind dabei beispielsweise an dem Sitzteil, der Rückenlehne oder der Kopfstütze des Kraftfahrzeugsitzes angeordnet.

Aus der DE 299 24 138 U1 ist ein Kraftfahrzeugsitz bekannt, dessen Sitzteil eine Polsterschicht aufweist, auf der der Fahrzeuginsasse Platz nehmen kann und unterhalb derer ein Hohlraum vorgesehen ist. In dem Hohlraum ist wiederum ein aufblasbares Kissen angeordnet, das eine luftdichte Hülle aufweist. Die luftdichte Hülle umschließt eine Kammer, in die die Luft eingebracht werden kann. In der Kammer ist ansonsten keinerlei Füllung vorgesehen.

Ein weiterer Kraftfahrzeugsitz mit mehreren Kissen ist aus der DE 198 06 535 C2 bekannt. Die Kissen sind innerhalb der Polsterung der Rückenlehne und des Sitzteils des Kraftfahrzeugsitzes angeordnet und umfassen wiederum jeweils eine Hülle, die mit einem Fluid befüllbar ist. Zu diesem Zweck ist die Hülle mit einem Fluiddruckeinstellungssystem verbunden, mit dessen Hilfe der Druck innerhalb der von der Hülle umschlossenen Kammer eingestellt werden kann. Auch hier befindet sich lediglich das Fluid innerhalb der Kammer, eine weitere Füllung ist nicht vorgesehen.

Die WO 01/13767 A1 beschreibt einen weiteren Kraftfahrzeugsitz. Der bekannte Kraftfahrzeugsitz weist ein Sitzteil und eine Rückenlehne auf, die mit mehreren aufblasbaren Kissen bzw. Luftzellen versehen sind. Die aufblasbaren Luftzellen sind jeweils an der dem Fahrzeuginsassen zugewandten Oberfläche des Sitzteils, der Rückenlehne und der Kopfstütze angeordnet. In den Kammern, die von den Luftzellen eingeschlossen sind, befindet sich je nach Befüllungsgrad mehr oder weniger Luft. Die mit dem Aufblasen oder Evakuieren der Luftzellen einhergehende Volumenänderung wird zur Anpassung des Sitzes an den jeweiligen Fahrzeuginsassen genutzt. So bewirkt beispielsweise die Verkleinerung oder Vergrößerung einer ersten Gruppe von Luftzellen eine Höhenverstellung einer zweiten Gruppe von Luftzellen, die an der Vorderseite der Kopfstütze angeordnet ist. Eine Vergrößerung der zweiten Gruppe von Luftblasen bewirkt wiederum ein Ausdehnen dieser Gruppe von Luftblasen in die Sitzrichtung. Somit ist indirekt ein Verstellen der Kopfstütze möglich, wenngleich die starre Kopfstütze der Sitzschale nicht bewegt wird. In den Luftzellen befindet sich wiederum lediglich Luft, jedoch keine weitere Füllung.

Anders ist dies bei dem Kraftfahrzeugsitz nach der DE 199 10 427 A1. Der bekannte Kraftfahrzeugsitz weist ein Vakuumkissen auf, das aus mehreren Segmenten besteht, wobei in den einzelnen Segmenten rieselfähiges Schüttgut eingebracht ist. Das Vakuumkissen weist dabei eine Schicht aus luftundurchlässigem Material auf, so dass das Vakuumkissen evakuiert werden kann. Durch Evakuieren des Vakuumkissens wird die äußere Hülle zusammengezogen und das rieselfähige Schüttgut verfestigt und fixiert. Die Verfestigung und Fixierung ist jedoch reversibel, was durch ein erneutes Belüften des Vakuumkissens bewirkt werden kann. Das bekannte Vakuumkissen kann den Fahrzeuginsassen besonders gleichmäßig abstützen, hat jedoch den Nachteil, dass sich das rieselfähige Schüttgut nur schwerfällig an die jeweilige Belastung anpasst. Ferner lässt sich das rieselfähige Schüttgut nur schwer wieder in die anfängliche Anordnung bringen, bevor ein neuer Fahrzeuginsasse durch entsprechende Belastung die für ihn komfortabelste Form einstellen und fixieren kann. Die Handhabung des bekannten Kraftfahrzeugsitzes ist mithin erschwert. Ferner gewährleistet der bekannte Kraftfahrzeugsitz zwar eine an den Fahrzeuginsassen angepasste, jedoch auch wenig komfortable Abstützung.

Die US 6,092,249, die als nächstliegender Stand der Technik angesehen wird, beschreibt ein Kissensystem mit mehreren Kissen, die jeweils einen luftdichten flexiblen Sack und einen in dem Sack angeordneten Schaumstoffblock aufweisen. Die luftdichten Säcke können einzeln oder in Gruppen über entsprechende Leitungen und Ventile mit Druck beaufschlagt werden. Im Gegensatz zu dem Schüttgut nach der DE 199 10 427 A1 kann der die Füllung ausbildende Schaumstoffblock leichter in die ursprüngliche Anordnung überführen, bevor ein neuer Fahrzeuginsasse durch entsprechende Belastung die für ihn komfortabelste Form einstellen kann, jedoch ist die Anpassung an den jeweiligen Fahrzeuginsassen noch immer erschwert.

Es ist daher eine Aufgabe der vorliegenden Erfindung, einen Kraftfahrzeugsitz mit mindestens einem belüftbaren und/oder aufblasbaren und/oder evakuierbaren Kissen zu schaffen, bei dem das Kissen eine Füllung aufweist, wobei die Anpassung des Kissens auf den jeweiligen Fahrzeuginsassen vereinfacht und der Sitzkomfort erhöht sein soll.

Diese Aufgabe wird durch die in Patentanspruch 1 angegebenen Merkmale gelöst. Vorteilhafte Ausführungsformen der Erfindung sind Gegenstand der Unteransprüche.

Der erfindungsgemäße Kraftfahrzeugsitz weist mindestens ein belüftbares und/oder aufblasbares und/oder evakuierbares Kissen auf. Das Kissen umfasst eine luftdichte Hülle, die entsprechend belüftbar, aufblasbar und/oder evakuierbar ist. Unter belüftbar ist hierbei zu verstehen, dass die Möglichkeit besteht, Luft in das Kissen ein- oder ausströmen zu lassen, beispielsweise mittels eines Ventils. Die luftdichte Hülle umschließt eine Kammer, in der - zusätzlich zu der vorhandenen Luftfüllung - eine weitere Füllung angeordnet ist. Diese weitere Füllung ist als eine zusammendrückbare Schaumstofffüllung ausgebildet. Damit die luftdichte Hülle einer Formänderung der Schaumstofffüllung sicher folgt, ist die Schaumstofffüllung mit der luftdichten Hülle flächig verklebt.

Im Gegensatz zu dem aus der DE 199 10 427 A1 bekannten Schüttgut lässt sich eine Schaumstofffüllung wesentlich einfacher wieder in eine Ausgangsform bringen, bevor ein anderer Fahrzeuginsasse auf dem Kraftfahrzeugsitz Platz nimmt, um diesen entsprechend anzupassen. Bei dem bekannten Schüttgut wirken die Reibungskräfte zwischen den einzelnen Partikeln einer schnellen Anpassung entgegen. Ein Schaumstoff kann ferner derart formstabil ausgebildet sein, dass er bereits bei fehlender Belastung durch die luftdichte Hülle oder einen Fahrzeuginsassen selbsttätig wieder in seine Ausgangsform zurückkehrt. Darüber hinaus gewährleistet die Schaumstofffüllung einen höheren Sitzkomfort als eine Schüttgutfüllung, die beispielsweise aus Styroporkugeln besteht und nach dem Fixieren der Styroporkugeln sehr hart ausgebildet ist.

Um die Fertigung des Kissens zu vereinfachen und eine weitgehend gleich bleibende Ausgangsform des Kissens zu gewährleisten, ist die Schaumstofffüllung in einer bevorzugten Ausführungsform des erfindungsgemäßen Kraftfahrzeugsitzes einstückig als ein zusammenhängender Schaumstoffkörper ausgebildet.

In einer weiteren bevorzugten Ausführungsform des erfindungsgemäßen Kraftfahrzeugsitzes ist das Kissen derart ausgebildet ist, dass es durch Belüften vergrößert werden kann. Die Vergrößerung des Volumens erfolgt demzufolge selbsttätig, sobald das Kissen belüftet wird. Es muss keine weitere Energie hinzugefügt werden, vielmehr ist die in der zusammengedrückten Schaumstofffüllung gespeicherte Energie ausreichend. Durch die Belüftung kann Luft in die Kammer des Kissens einströmen, so dass kein Unterdruck entsteht, der eine Vergrößerung verhindern könnte.

In einer weiteren bevorzugten Ausführungsform des erfindungsgemäßen Kraftfahrzeugsitzes ist das Kissen derart ausgebildet, dass es durch Belüften und Zusammendrücken unter Komprimierung der Schaumstofffüllung verkleinert werden kann. So müsste das belüftete Kissen lediglich durch das Gewicht des Fahrzeuginsassen belastet werden, um die Schaumstofffüllung und damit das Kissen zusammenzudrücken. Durch die Belüftung kann die innerhalb der Kammer vorhandene Luft entweichen und wirkt der Verkleinerung bzw. Anpassung nicht entgegen.

In einer vorteilhaften Ausführungsform des erfindungsgemäßen Kraftfahrzeugsitzes ist eine Pumpe zum Aufblasen und/oder Evakuieren der luftdichten Hülle vorgesehen. Dank der Pumpe kann die Anpassung des Kissens bzw. des Kraftfahrzeugsitzes an den jeweiligen Fahrzeuginsassen beschleunigt werden.

Gemäß einer weiteren vorteilhaften Ausführungsform des erfindungsgemäßen Kraftfahrzeugsitzes kann das Kissen durch Aufpumpen der luftdichten Hülle vergrößert und/oder durch Evakuieren der luftdichten Hülle unter Komprimierung der Schaumstofffüllung verkleinert werden. So bewirkt ein Aufpumpen eine Vergrößerung der Kammer, an die sich die Schaumstofffüllung entsprechend anpassen kann, wohingegen ein Evakuieren eine Verkleinerung der Kammer bewirkt, so dass die Schaumstofffüllung durch die sich zusammenziehende Hülle zusammengedrückt wird.

In einer besonders bevorzugten Ausführungsform des erfindungsgemäßen Kraftfahrzeugsitzes weist der Schaumstoffkörper eine Ausgangsform auf, in der der Schaumstoffkörper sein maximales Volumen hat, wobei der Schaumstoffkörper derart ausgebildet ist, dass der Schaumstoffkörper im unbelasteten Zustand bei belüftetem Kissen stets in die Ausgangsform zurückkehrt. Diese elastische Verformung des Schaumstoffkörpers bewirkt somit ein selbsttätiges Zurückstellen des Kissens in seine Ausgangsform, wenn das unbelastete Kissen belüftet oder aufgepumpt wird.

In einer weiteren vorteilhaften Ausführungsform des erfindungsgemäßen Kraftfahrzeugsitzes ist mindestens eine verschließbare Öffnung zum Belüften und/oder Aufblasen und/oder Evakuieren des Kissens in der luftdichten Hülle vorgesehen. In der Öffnung kann beispielsweise ein steuerbares Ventil angeordnet sein.

Gemäß einer weiteren bevorzugten Ausführungsform des erfindungsgemäßen Kraftfahrzeugsitzes ist eine Volumenänderung des Kissens bei geschlossener Öffnung unterbunden. So würde der Verkleinerung ein Überdruck und der Vergrößerung ein Unterdruck innerhalb des Kissens bzw. der luftdichten Hülle entgegenwirken.

In einer weiteren vorteilhaften Ausführungsform des erfindungsgemäßen Kraftfahrzeugsitzes ist ein steuerbares Ventil, vorzugsweise ein manuell steuerbares Ventil, zum Öffnen und Schließen der Öffnung vorgesehen. Ein manuell steuerbares Ventil könnte beispielsweise im Griffbereich des Fahrzeuginsassen vorgesehen sein.

In einer weiteren vorteilhaften Ausführungsform des erfindungsgemäßen Kraftfahrzeugsitzes umfasst der Kraftfahrzeugsitz mehrere Kissen mit dem zuvor beschriebenen Aufbau.

Um bei der Montage des Kraftfahrzeugsitzes eine genaue Positionierung der Kissen zueinander zu erreichen und gleichzeitig die Montage zu vereinfachen, sind die Kissen in einer weiteren bevorzugten Ausführungsform des erfindungsgemäßen Kraftfahrzeugsitzes unter Ausbildung einer auflegbaren Matte miteinander verbunden. Hierunter kann auch eine Matte verstanden werden, die bereits sitzförmig ausgebildet ist.

Grundsätzlich können die mehreren Kissen gemeinsam belüftet, evakuiert oder aufgeblasen werden, indem zwischen deren Kammern eine Strömungsverbindung besteht. Um jedoch eine besonders individuelle Anpassung des Kraftfahrzeugsitzes an den jeweiligen Fahrzeuginsassen zu ermöglichen können die Kissen der Matte in einer weiteren bevorzugten Ausführungsform des erfindungsgemäßen Kraftfahrzeugsitzes unabhängig voneinander belüftet, aufgeblasen und/oder evakuiert werden.

Gemäß einer weiteren vorteilhaften Ausführungsform des erfindungsgemäßen Kraftfahrzeugsitzes weist der Kraftfahrzeugsitz eine sitzförmige, starre Stützstruktur auf, an der die Kissen oder die Matte abgestützt und/oder befestigt sind.

In einer weiteren vorteilhaften Ausführungsform des erfindungsgemäßen Kraftfahrzeugsitzes weist die Stützstruktur einen Rückenstützabschnitt und einen beweglich an dem Rückenstützabschnitt angeordneten Kopfstützabschnitt auf. Die Anpassung der Kopfabstützung kann somit beispielsweise sowohl anhand eines Kissens, das vor dem Kopfstützabschnitt angeordnet ist, als auch mit Hilfe des Kopfstützabschnittes selbst erfolgen. Der Kopfstützabschnitt der Stützstruktur kann beispielsweise in der Höhe oder der Neigung verstellt werden.

In einer weiteren bevorzugten Ausführungsform des erfindungsgemäßen Kraftfahrzeugsitzes ist der Kopfstützabschnitt der Stützstruktur verschwenkbar an dem Rückenstützabschnitt der Stützstruktur angeordnet. Vorzugsweise kann der Kopfstützabschnitt um eine Achse quer zur Sitzrichtung verschenkt werden. Auf diese Weise kann die Neigung der gesamten Kopfstütze, die mindestens ein Kissen und den Kopfstützabschnitt der Stützstruktur umfasst, verändert werden.

Um für die Verstellung des Kopfstützabschnittes der Stützstruktur nicht auf einen zusätzlichen Antrieb zurückgreifen zu müssen, ist in einer weiteren besonders bevorzugten Ausführungsform des erfindungsgemäßen Kraftfahrzeugsitzes mindestens ein Kissen derart an der Stützstruktur angeordnet, dass der Kopfstützabschnitt durch Volumenänderung des Kissens bewegbar oder verschwenkbar ist. So kann dieses Kissen beispielsweise einerseits an dem Kopfstützabschnitt und andererseits an dem Rückenlehnenabschnitt abgestützt sein, um bei einer Volumenänderung ein relatives Verstellen des Kopfstützabschnitts gegenüber dem Rückenlehnenabschnitt zu bewirken.

Die Erfindung wird im Folgenden anhand von beispielhaften Ausführungsformen unter Bezugnahme auf die beigefügten Zeichnungen näher erläutert. Es zeigen:
- Fig. 1: eine perspektivische Explosionsdarstellung des erfindungsgemäßen Kraftfahrzeugsitzes in einer ersten Ausführungsform,
- Fig. 2: eine geschnittene Darstellung eines einzelnen Kissens des Kraftfahrzeugsitzes von Fig. 1 mit der Schaumstofffüllung in der Ausgangsform,
- Fig. 3: das Kissen von Fig. 3 mit der Schaumstofffüllung in einer teilweise zusammengedrückten Form,
- Fig. 4: eine teilweise Seitenansicht des Kraftfahrzeugsitzes von Fig. 1 in einer alternativen Ausführungsform mit dem Kopfstützabschnitt in einer hinteren Stellung und
- Fig. 5: den Kraftfahrzeugsitz von Fig. 4 mit dem Kopfstützabschnitt in einer vorderen Stellung.

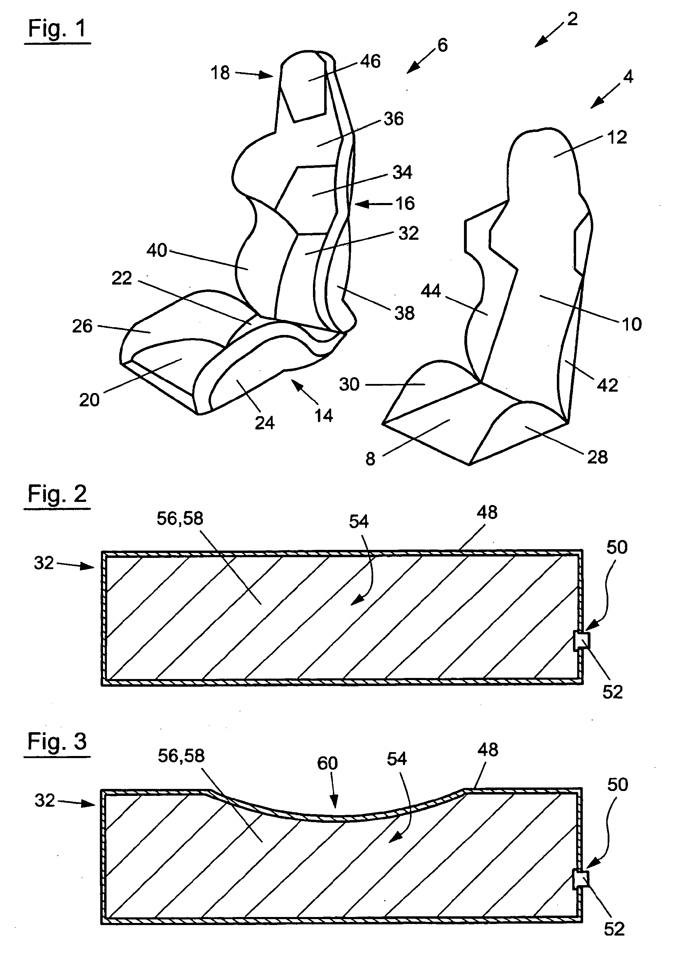

Fig. 1 zeigt eine Explosionsdarstellung einer Ausführungsform des erfindungsgemäßen Kraftfahrzeugsitzes 2. Der Kraftfahrzeugsitz 2 setzt sich aus einer sitzförmigen Stützstruktur 4 und einer Matte 6 zusammen. Die sitzförmige Stützstruktur 4 ist starr und schalenförmig ausgebildet und kann beispielsweise aus Kunststoff gefertigt sein. Die Stützstruktur 4 umfasst einen unteren Stützabschnitt 8, einen daran anschließenden aufrechten Rückenstützabschnitt 10 und einen Kopfstützabschnitt 12, der sich nach oben an den Rückenstützabschnitt 10 anschließt. Die Matte 6 kann auf die Stützstruktur 4 aufgelegt werden, so dass diese bei zusammengesetztem Kraftfahrzeugsitz 2 an der Stützstruktur 4 abgestützt und vorzugsweise an dieser befestigt ist.

Die Matte 4 setzt sich aus einem Sitzteilabschnitt 14, einem Rückenlehnenabschnitt 16 und einem Kopfstützenabschnitt 18 zusammen. Im zusammengebauten Zustand des Kraftfahrzeugsitzes 2 ist der Sitzteilabschnitt 14 an dem unteren Stützabschnitt 8, der Rückenlehnenabschnitt 16 an dem Rückenstützabschnitt 10 und der Kopfstützenabschnitt 18 an dem Kopfstützabschnitt 12 der Stützstruktur 4 abgestützt. Insgesamt setzt sich die Matte 6 aus mehreren Kissen zusammen, die derart randseitig miteinander verbunden sind, dass auch die Matte 6 bereits eine Sitzform ausbildet, die in etwa der durch die Stützstruktur 4 vorgegebenen Sitzform entspricht.

So umfasst der Sitzteilabschnitt 14 zwei Kissen 20, 22, die hintereinander liegend die Sitzfläche ausbilden, sowie zwei weitere Kissen 24, 26, die derart seitlich mit den beiden erstgenannten Kissen 20, 22 verbunden sind, dass die Kissen 24, 26 nach oben stehen und ein seitliches Verrutschen des Fahrzeuginsassen verhindern. Letzteres wird ferner durch seitliche, erhabene Stützteile 28, 30 an dem unteren Stützabschnitt 8 der Stützstruktur 4 unterstützt.

Der Rückenlehnenabschnitt 16 umfasst zum einen drei hintereinander angeordnete Kissen 32, 34, 36, die diejenige Fläche ausbilden, an der der Fahrzeuginsasse seinen Rücken abstützen kann, und zum anderen zwei seitliche Kissen 38, 40, die derart seitlich mit den Kissen 32, 34 verbunden sind, dass die Kissen 38, 40 nach vorne stehen und ebenfalls ein seitliches Verrutschen des Fahrzeuginsassen verhindern. Dies wird wiederum unterstützt von zwei seitlichen, erhabenen Stützteile 42, 44 an dem Rückenstützabschnitt 10 der Stützstruktur 4. Darüber hinaus sind die seitlichen Enden des Kissens 36 ebenfalls nach vorne geneigt, um den Fahrzeuginsassen sicher zu stützen.

Der Kopfstützenabschnitt 18 umfasst ein Kissen 46, das sich nach oben an das Kissen 36 des Rückenlehnenabschnitts 16 anschließt und mit diesem verbunden ist.

Nachstehend wird der grundsätzliche Aufbau des Kissens 32 des Rückenlehnenabschnitts 16 stellvertretend für alle vorstehend genannten Kissen 20, 22, 24, 34, 36, 38, 40 unter Bezugnahme auf die Fig. 2 und 3 beschrieben, die denselben Aufbau haben.

Das Kissen 32 weist eine luftdichte Hülle 48 auf, die vorzugsweise aus einem elastischen Material besteht. In der luftdichten Hülle 48 ist eine verschließbare Öffnung 50 vorgesehen. Um die Öffnung 50 verschließen und auch wieder öffnen zu können, ist ein steuerbares Ventil 52 in der Öffnung 50 vorgesehen. Sofern es sich um ein manuell steuerbares Ventil 52 handelt, sollte es im Greifbereich des Fahrzeuginsassen angeordnet sein, so dass ein schneller und einfacher Zugriff gewährleistet ist. Die luftdichte Hülle 48 umschließt eine Kammer 54. In der Kammer 54 ist zum einen Luft eingeschlossen und zum anderen eine zusammendrückbare Schaumstofffüllung 56 angeordnet. Die Schaumstofffüllung 56 ist einstückig als ein zusammenhängender Schaumstoffkörper 58 ausgebildet. Die Schaumstofffüllung 56 ist von innen flächig mit der luftdichten Hülle 48 verklebt.

Der Schaumstoffkörper 58 weist eine Ausgangsform auf, die in Fig. 2 dargestellt ist. In der Ausgangsform hat der Schaumstoffkörper 58 sein maximales Volumen angenommen. Der Schaumstoffkörper 58 ist ferner derart ausgebildet, dass dieser stets wieder diese Ausgangsform annimmt, wenn der Schaumstoffkörper 58 bzw. das Kissen 32 nicht belastet und die luftdichte Hülle 48 über die Öffnung 50 belüftet ist oder aufgeblasen wird, wie dies nachstehend näher erläutert wird.

Solange das Ventil 52 geschlossen ist, kann das Kissen 32 nicht vergrößert oder verkleinert werden, da die in der Kammer 54 vorhandene Luft ein Zusammendrücken oder Vergrößern des Kissens 32 verhindert. Wird das Ventil 52 geöffnet und das Kissen dadurch belüftet, so bewirkt das Gewicht des Fahrzeuginsassen, dass die Luft aus der Kammer 54 durch die Öffnung 50 entweicht und der Schaumstoffkörper 58 zusammengedrückt wird, wie dies in Fig. 3 gezeigt ist. Es ist eine Mulde 60 in der dem Fahrzeuginsassen zugewandten Seite des Kissens 32 entstanden, die eine Negativform des angelehnten Körperteils des Fahrzeuginsassen aufweist. Nunmehr kann eine weitere Verkleinerung des Schaumstoffkörpers 58 ausgeschlossen werden, indem das Ventil 52 wieder geschlossen wird. Die an den Fahrzeuginsassen angepasste Form des Schaumstoffkörpers 58 bleibt dadurch erhalten, da die Luft innerhalb der Kammer 54 sowohl eine weitere Volumenänderung des Kissens 32 verhindert.

Um das Kissen 32 in der Folgezeit wieder an einen neuen Fahrzeuginsassen anpassen zu können, wird wie nachstehend beschrieben vorgegangen. Der Schaumstoffkörper 58 ist zusammengedrückt, weist jedoch eine Formstabilität auf, die dazu führt, dass der Schaumstoffkörper 58 wieder die in Fig. 2 gezeigte Ausgangsform zurückkehrt, wenn das Kissen 32 unbelastet und belüftet ist. Sitzt der Fahrzeuginsasse also nicht mehr auf dem Kraftfahrzeugsitz und wird ferner das Ventil 52 geöffnet, um das Kissen 32 zu belüften, so drängt der Schaumstoffkörper 58 wieder zurück in die Ausgangsform und bewirkt eine Volumenvergrößerung des Kissens 32. Dies geschieht selbsttätig allein aufgrund der in dem zusammengedrückten Schaumstoffkörper 58 gespeicherten Energie. Es muss lediglich das Kissen 32 belüftet werden.

Die luftdichte Hülle 48 des Kissens 32 kann dennoch zusätzlich oder auch ausschließlich von einer Pumpe (nicht dargestellt) evakuiert und/oder aufgeblasen werden, wobei zu diesem Zweck eine entsprechende Luftleitung (nicht dargestellt) vorgesehen werden kann, die zu dem Ventil 52 führt. So könnte das Kissen 32 bei dieser alternativen Ausführungsform durch Aufpumpen bzw. Evakuieren der luftdichten Hülle 48 vergrößert bzw. verkleinert werden, wobei der Schaumstoffkörper 58 beim Evakuieren durch die sich zusammenziehende Hülle 48 komprimiert würde. Auch bei dieser Ausführungsvariante bleibt die angepasste Kissenform durch Schließen des Ventils 52 erhalten.

Um eine besonders individuelle Anpassung des Kraftfahrzeugsitzes 2 an den jeweiligen Fahrzeuginsassen zu ermöglichen, können die Kissen 20, 22, 24, 26, 32, 34, 36, 38, 40, 46 der Matte 6 unabhängig voneinander belüftet, aufgeblasen und/oder evakuiert werden. Zu diesem Zweck weist jedes der Kissen 20, 22, 24, 26, 32, 34, 36, 38, 40, 46 den zuvor beschriebenen Aufbau mit einer entsprechenden Öffnung 50 auf.

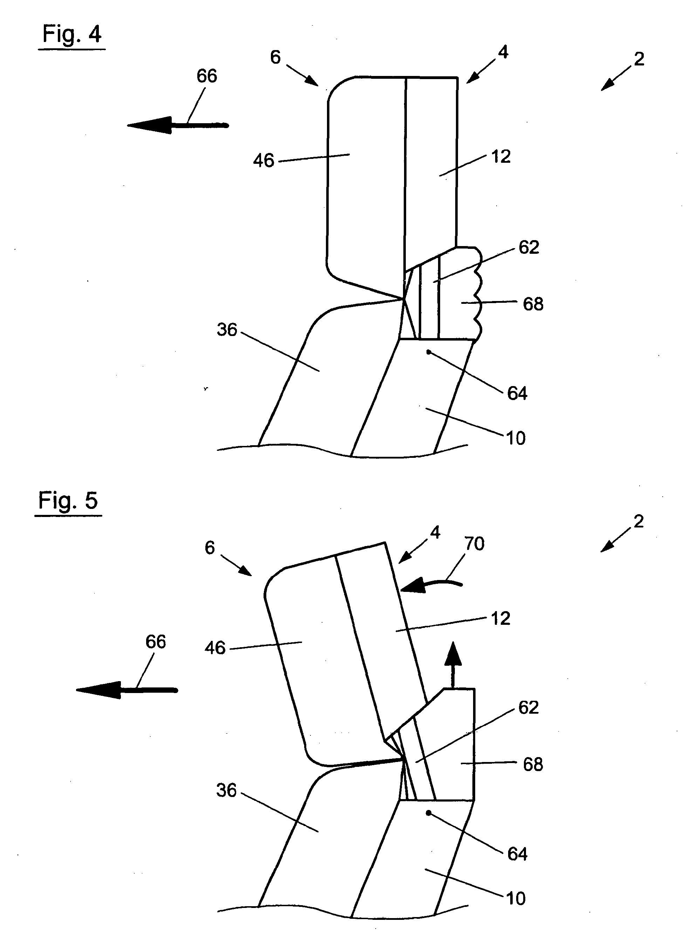

Nachstehend wird unter Bezugnahme auf die Fig. 4 und 5 eine abgewandelte Ausführungsform beschrieben, wobei lediglich auf die Unterschiede zu der Ausführungsform aus den Fig. 1 bis 3 eingegangen wird und die obige Beschreibung ansonsten entsprechend gilt. Dabei werden gleiche Bezugszeichen für gleiche oder ähnliche Teile verwendet.

Bei der abgewandelten Ausführungsform sind der Rückenstützabschnitt 10 der Stützstruktur 4 und der Kopfstützabschnitt 12 der Stützstruktur 4 nicht starr miteinander verbunden. Vielmehr erstreckt sich ausgehend von dem Kopfstützabschnitt 12 mindestens eine starre Strebe 62 bis zu dem Rückenstützabschnitt 10, wobei die Strebe 62 fest mit dem Kopfstützabschnitt 12 und beweglich mit dem Rückenstützabschnitt 10 verbunden ist. Im vorliegenden Beispiel kann die Strebe 62 um eine Achse 64 verschwenkt werden, die sich quer zur Sitzrichtung 66 erstreckt. Die gesamte Kopfstütze, bestehend aus dem Kopfstützabschnitt 12 und dem daran abgestützten Kissen 46, kann somit um die Achse 64 verschwenkt werden, so dass die Neigung der Kopfstütze dem Wunsch des Fahrzeuginsassen entsprechend eingestellt werden kann. Zu diesem Zweck ist jedoch kein zusätzlicher Antrieb vorgesehen. Vielmehr ist ein Kissen 68, das denselben Aufbau wie die vorbeschriebenen Kissen 20, 22, 24, 26, 32, 34, 36, 38, 40, 46 hat, vorgesehen, dass sich zwischen den Kopfstützabschnitt 12 und den Rückenstützabschnitt 10 erstreckt und sich beiderseits abstützt.

Aufgrund der bereits zuvor erläuterten Volumenänderung des Kissens 68 durch Belüften, Aufpumpen und/oder Evakuieren, kann der Kopfstützabschnitt 12 verschwenkt werden. In der hinteren Stellung des Kopfstützabschnitts 12 (Fig. 4) ist das Kissen 68 bzw. dessen Schaumstoffkörper 58 zusammengedrückt. Wird das Kissen 68 belüftet oder aufgepumpt, so vergrößert sich das Kissen 68 und wirkt derart auf den Kopfstützabschnitt 12 ein, dass dieser um die Achse 64 in die vordere Stellung (Fig. 5) verschwenkt wird, wie dies anhand des Pfeils 70 angedeutet ist.

In umgekehrter Richtung müsste das Kissen 68 wieder belüftet und entlastet oder evakuiert werden. Sollte beim Zurückstellen lediglich mit einer Pumpe evakuiert werden, ohne dass eine entsprechende Rückstellkraft auf den Kopfstützabschnitt 12 ausgeübt wird, ist es erforderlich, dass das Kissen 68 bzw. dessen Hülle 48 fest mit dem Kopfstützabschnitt 12 und dem Rückenstützabschnitt 10 verbunden ist. Das Kissen 68 kann fest mit der Matte 6 verbunden sein.

### Bezugszeichenliste

- 2: Kraftfahrzeugsitz
- 4: Stützstruktur
- 6: Matte
- 8: unterer Stützabschnitt der Stützstruktur
- 10: Rückenstützabschnitt der Stützstruktur
- 12: Kopfstützabschnitt der Stützstruktur
- 14: Sitzteilabschnitt der Matte
- 16: Rückenlehnenabschnitt der Matte
- 18: Kopfstützenabschnitt der Matte
- 20: Kissen
- 22: Kissen
- 24: Kissen
- 26: Kissen
- 28: Stützteil
- 30: Stützteil
- 32: Kissen
- 34: Kissen
- 36: Kissen
- 38: Kissen
- 40: Kissen
- 42: Stützteil
- 44: Stützteil
- 46: Kissen
- 48: luftdichte Hülle
- 50: Öffnung
- 52: Ventil
- 54: Kammer
- 56: Schaumstofffüllung
- 58: zusammenhängender Schaumstoffkörper
- 60: Mulde
- 62: Strebe
- 64: Achse
- 66: Sitzrichtung
- 68: Kissen
- 70: Pfeil

## Patentansprüche

1. Kraftfahrzeugsitz mit mindestens einem belüftbaren und/oder aufblasbaren und/oder evakuierbaren Kissen (20, 22, 24, 26, 32, 34, 36, 38, 40, 46, 68), wobei das Kissen (20, 22, 24, 26, 32, 34, 36, 38, 40, 46, 68) eine luftdichte Hülle (48) aufweist, die eine Kammer (54) umschließt, in der eine Füllung angeordnet ist, die eine zusammendrückbare Schaumstofffüllung (56) ist, **dadurch gekennzeichnet, dass** die Schaumstofffüllung (56) mit der luftdichten Hülle (48) flächig verklebt ist.

2. Kraftfahrzeugsitz nach Anspruch 1, **dadurch gekennzeichnet, dass** die Schaumstofffüllung (56) einstückig als ein zusammenhängender Schaumstoffkörper (58) ausgebildet ist.

3. Kraftfahrzeugsitz nach einem der Ansprüche 1 oder 2, **dadurch gekennzeichnet, dass** das Kissen (20, 22, 24, 26, 32, 34, 36, 38, 40, 46, 68) derart ausgebildet ist, dass es durch Belüften vergrößerbar ist.

4. Kraftfahrzeugsitz nach einem der vorangehenden Ansprüche, **dadurch gekennzeichnet, dass** das Kissen (20, 22, 24, 26, 32, 34, 36, 38, 40, 46, 68) derart ausgebildet ist, dass es durch Belüften und Zusammendrücken unter Komprimierung der Schaumstofffüllung verkleinerbar ist.

5. Kraftfahrzeugsitz nach einem der vorangehenden Ansprüche, **dadurch gekennzeichnet, dass** eine Pumpe zum Aufblasen und/oder Evakuieren der luftdichten Hülle (48) vorgesehen ist.

6. Kraftfahrzeugsitz nach Anspruch 5, **dadurch gekennzeichnet, dass** das Kissen (20, 22, 24, 26, 32, 34, 36, 38, 40, 46, 68) durch Aufpumpen der luftdichten Hülle (48) vergrößerbar und/oder durch Evakuieren der luftdichten Hülle (48) unter Komprimierung der Schaumstofffüllung (56) verkleinerbar ist.

7. Kraftfahrzeugsitz nach einem der Ansprüche 2 bis 6, **dadurch gekennzeichnet, dass** der Schaumstoffkörper (58) eine Ausgangsform aufweist, in der der Schaumstoffkörper (58) sein maximales Volumen hat, wobei der Schaumstoffkörper (58) derart ausgebildet ist, dass der Schaumstoffkörper (58) im unbelasteten Zustand bei belüftetem Kissen (20, 22, 24, 26, 32, 34, 36, 38, 40, 46, 68) stets in die Ausgangsform zurückkehrt.

8. Kraftfahrzeugsitz nach einem der vorangehenden Ansprüche, **dadurch gekennzeichnet, dass** mindestens eine verschließbare Öffnung (50) zum Belüften und/oder Aufblasen und/oder Evakuieren des Kissens (20, 22, 24, 26, 32, 34, 36, 38, 40, 46, 68) in der luftdichten Hülle (48) vorgesehen ist.

9. Kraftfahrzeugsitz nach Anspruch 8, **dadurch gekennzeichnet, dass** eine Volumenänderung des Kissens (20, 22, 24, 26, 32, 34, 36, 38, 40, 46, 68) bei geschlossener Öffnung (50) unterbunden ist.

10. Kraftfahrzeugsitz nach einem der Ansprüche 8 oder 9, **dadurch gekennzeichnet, dass** ein steuerbares Ventil (52), vorzugsweise ein manuell steuerbares Ventil, zum Öffnen und Schließen der Öffnung (50) vorgesehen ist.

11. Kraftfahrzeugsitz nach einem der vorangehenden Ansprüche, **dadurch gekennzeichnet, dass** der Kraftfahrzeugsitz (2) mehrere Kissen (20, 22, 24, 26, 32, 34, 36, 38, 40, 46, 68) umfasst.

12. Kraftfahrzeugsitz nach Anspruch 11, **dadurch gekennzeichnet, dass** die Kissen (20, 22, 24, 26, 32, 34, 36, 38, 40, 46, 68) unter Ausbildung einer auflegbaren Matte (6) miteinander verbunden sind.

13. Kraftfahrzeugsitz nach 12, **dadurch gekennzeichnet, dass** die Kissen (20, 22, 24, 26, 32, 34, 36, 38, 40, 46, 68) der Matte (6) unabhängig voneinander belüftbar und/oder aufblasbar und/oder evakuierbar sind.

14. Kraftfahrzeugsitz nach einem Ansprüche 11 bis 13, **dadurch gekennzeichnet, dass** der Kraftfahrzeugsitz (2) eine sitzförmige, starre Stützstruktur (4) aufweist, an der die Kissen (20, 22, 24, 26, 32, 34, 36, 38, 40, 46, 68) oder die Matte (6) abgestützt und/oder befestigt sind.

15. Kraftfahrzeugsitz nach Anspruch 14, **dadurch gekennzeichnet, dass** die Stützstruktur (4) einen Rückenstützabschnitt (10) und einen beweglich an dem Rückenstützabschnitt (10) angeordneten Kopfstützabschnitt (12) aufweist.

16. Kraftfahrzeugsitz nach Anspruch 15, **dadurch gekennzeichnet, dass** der Kopfstützabschnitt (12) verschwenkbar an dem Rückenstützabschnitt (10) angeordnet ist, vorzugsweise um eine Achse (64) quer zur Sitzrichtung (66).

17. Kraftfahrzeugsitz nach einem der Ansprüche 15 oder 16, **dadurch gekennzeichnet, dass** mindestens ein Kissen (68) derart an der Stützstruktur (4) angeordnet ist, dass der Kopfstützabschnitt (12) durch Volumenänderung des Kissens (68) bewegbar oder verschwenkbar ist.

## Claims

1. A motor vehicle seat, comprising at least one ventable and/or inflatable and/or evacuable cushion (20, 22, 24, 26, 32, 34, 36, 38, 40, 46, 68), wherein the cushion (20, 22, 24, 26, 32, 34, 36, 38, 40, 46, 68) has an airtight covering (48) which encloses a chamber (54) in which a filling is arranged, which is a compressible foam filling (56), **characterized in that** the foam filling (56) is glued together with the airtight covering (48) in a planar fashion.

2. A motor vehicle seat according to claim 1, **characterized in that** the foam filling (56) is arranged integrally as a contiguous foam body (58).

3. A motor vehicle seat according to one of the claims 1 or 2, **characterized in that** the cushion (20, 22, 24, 26, 32, 34, 36, 38, 40, 46, 68) is arranged in such a way that it can be enlarged by ventilation.

4. A motor vehicle seat according to one of the preceding claims, **characterized in that** the cushion (20, 22, 24, 26, 32, 34, 36, 38, 40, 46, 68) is arranged in such a way that it can be reduced in size by venting and compressing under compression of the foam filling.

5. A motor vehicle seat according to one of the preceding claims, **characterized in that** a pump is provided for inflating and/or evacuating the airtight covering (48).

6. A motor vehicle seat according to claim 5, **characterized in that** the cushion (20, 22, 24, 26, 32, 34, 36, 38, 40, 46, 68) can be enlarged by inflating the airtight covering (48) and/or reduced in size by evacuating the airtight covering (48) under compression of the foam filling (56).

7. A motor vehicle seat according to one of the claims 2 to 6, **characterized in that** the foam body (58) has an initial shape in which the foam body (58) has its maximum volume, wherein the foam body (58) is arranged in such a way that the foam body (58) always returns to its initial shape in the unloaded state when the cushion (20, 22, 24, 26, 32, 34, 36, 38, 40, 46, 68) is ventilated.

8. A motor vehicle seat according to one of the preceding claims, **characterized in that** at least one closable opening (50) for venting and/or inflating and/or evacuating the cushion (20, 22, 24, 26, 32, 34, 36, 38, 40, 46, 68) is provided in the airtight covering (48).

9. A motor vehicle seat according to claim 8, **characterized in that** a change in the volume of the cushion (20, 22, 24, 26, 32, 34, 36, 38, 40, 46, 68) is prevented when the opening (50) is closed.

10. A motor vehicle seat according to one of the claims 8 or 9, **characterized in that** a controllable valve (52), preferably a manually controllable valve, is provided for opening and closing the opening (50).

11. A motor vehicle seat according to one of the preceding claims, **characterized in that** the vehicle seat (2) comprises several cushions (20, 22, 24, 26, 32, 34, 36, 38, 40, 46, 68).

12. A motor vehicle seat according to claim 11, **characterized in that** the cushions (20, 22, 24, 26, 32, 34, 36, 38, 40, 46, 68) are connected to each other by forming a layable mat (6).

13. A motor vehicle seat according to claim 12, **characterized in that** the cushions (20, 22, 24, 26, 32, 34, 36, 38, 40, 46, 68) of the mat can be vented and/or inflated and/or evacuated independently from each other.

14. A motor vehicle seat according to one of the claims 11 to 13, **characterized in that** the motor vehicle seat (2) has a seat-like rigid support structure (4), on which the cushions (20, 22, 24, 26, 32, 34, 36, 38, 40, 46, 68) or the mat (6) are supported and/or fixed.

15. A motor vehicle seat according to claim 14, **characterized in that** the support structure (4) has a back support section (10) and a head support section (12) which is movably arranged on the back support section (10).

16. A motor vehicle seat according to claim 15, **characterized in that** the head support section (12) is pivotably arranged on the back support section (10), preferably about an axis (64) transversely to the seat direction.

17. A motor vehicle seat according to one of the claims 15 or 16, **characterized in that** at least one cushion (68) is arranged on the support structure (4) in such a way that the head support section (12) is movable or pivotable by a change in the volume of the cushion (68).

## Revendications

1. Siège de véhicule à moteur avec au moins un coussin (20, 22, 24, 26, 32, 34, 36, 38, 40, 46, 68) pouvant être rempli d'air et/ou gonflé et/ou pouvant être vidé peut, lequel coussin (20, 22, 24, 26, 32, 34, 36, 38, 40, 46, 68) présente une enveloppe étanche à l'air (48) renfermant une chambre (54) dans laquelle est disposé un remplissage qui est un remplissage en mousse (56) compressible, **caractérisé en ce que** le remplissage en mousse (56) est collé à plat avec l'enveloppe étanche à l'air (48).

2. Siège de véhicule à moteur selon la revendication 1, **caractérisé en ce que** le remplissage en mousse (56) est conçu d'une pièce comme un élément en mousse (58) d'un seul tenant.

3. Siège de véhicule à moteur selon l'une des revendications 1 ou 2, **caractérisé en ce que** le coussin (20, 22, 24, 26, 32, 34, 36, 38, 40, 46, 68) est conçu de telle manière qu'il peut être agrandi par un apport d'air.

4. Siège de véhicule à moteur selon l'une des revendications principales, **caractérisé en ce que** le coussin (20, 22, 24, 26, 32, 34, 36, 38, 40, 46, 68) est conçu de telle manière qu'il peut être réduit s'il est rempli d'air et comprimé en compressant le remplissage en mousse.

5. Siège de véhicule à moteur selon l'une des revendications principales, **caractérisé en ce qu'**il est prévu une pompe pour gonfler et/ou vider l'enveloppe étanche à l'air (48).

6. Siège de véhicule à moteur selon la revendication 5, **caractérisé en ce que** le coussin (20, 22, 24, 26, 32, 34, 36, 38, 40, 46, 68) peut être agrandi par le gonflage de l'enveloppe étanche à l'air (48) et/ou réduit par le vidage de l'enveloppe étanche à l'air (48) avec compression du remplissage en mousse (56).

7. Siège de véhicule à moteur selon l'une des revendications 2 à 6, **caractérisé en ce que caractérisé en ce que** l'élément en mousse (58) présente une forme initiale dans laquelle l'élément en mousse (58) a son volume maximal, l'élément en mousse (58) étant conformé de telle manière que l'élément en mousse (58) dans l'état non contraint, lorsque le coussin (20, 22, 24, 26, 32, 34, 36, 38, 40, 46, 68) est gonflé, revient toujours à la forme initiale.

8. Siège de véhicule à moteur selon l'une des revendications précédentes, **caractérisé en ce qu'**au moins une ouverture pouvant être refermée (50) est prévue dans l'enveloppe étanche à l'air (48) pour remplir d'air le coussin (20, 22, 24, 26, 32, 34, 36, 38, 40, 46, 68) et/ou le gonfler et/ou le vider.

9. Siège de véhicule à moteur selon la revendication 8, **caractérisé en ce qu'**un changement de volume du coussin (20, 22, 24, 26, 32, 34, 36, 38, 40, 46, 68) est empêché lorsque l'ouverture (50) est fermée.

10. Siège de véhicule à moteur selon l'une des revendications 8 ou 9, **caractérisé en ce qu'**il est prévu une valve (52) pouvant être actionnée, de préférence une valve pouvant être actionnée manuellement, pour ouvrir ou fermer l'ouverture (50).

11. Siège de véhicule à moteur selon l'une des revendications précédentes, **caractérisé en ce que** le siège de véhicule à moteur (2) comprend plusieurs coussins (20, 22, 24, 26, 32, 34, 36, 38, 40, 46, 68).

12. Siège de véhicule à moteur selon la revendication 11, **caractérisé en ce que** les coussins (20, 22, 24, 26, 32, 34, 36, 38, 40, 46, 68) sont reliés entre eux en formant un tapis (6) pouvant être posé à plat.

13. Siège de véhicule à moteur selon la revendication 12, **caractérisé en ce que** les coussins (20, 22, 24, 26, 32, 34, 36, 38, 40, 46, 68) du tapis (6) peuvent être remplis d'air et/ou gonflés et/ou vidés indépendamment les uns des autres.

14. Siège de véhicule à moteur selon l'une des revendications 11 à 13, **caractérisé en ce que** le siège de véhicule à moteur (2) présente une structure de soutien (4) rigide en forme de siège, sur laquelle les coussins (20, 22, 24, 26, 32, 34, 36, 38, 40, 46, 68) et le tapis (6) s'appuient et/ou sont fixés.

15. Siège de véhicule à moteur selon la revendication 14, **caractérisé en ce que** la structure de soutien (4) présente une section de soutien du dos (10) et une section de soutien de la tête (12) disposée de façon mobile sur la section de soutien du dos (10).

16. Siège de véhicule à moteur selon la revendication 15, **caractérisé en ce que** la section de soutien de la tête (12) est disposée de façon basculante sur la section de soutien du dos (10), de préférence autour d'un axe (64) transversal par rapport à l'orientation du siège (66).

17. Siège de véhicule à moteur selon l'une des revendications 15 ou 16, **caractérisé en ce qu'**au moins un coussin (68) est disposé sur la structure de soutien (4) de telle manière que la section de soutien de la tête (12) peut bouger ou basculer grâce au changement de volume du coussin (68).
